# EUROPEAN PATENT APPLICATION

(11) **EP 1 220 121 A1**
(43) Date of publication of application: **03.07.2002**
(21) Application number: 00204762.9
(22) Date of filing: 29.12.2000
(51) Int. Cl.: G06F 17/50, A01G 7/00

(54) **System and method for predicting plant development**

(71) Applicant: Rockwool International A/S, 2640 Hedehusene (DK)
(72) Inventor: The designation of the inventor has not yet been filed
(74) Representative: De Hoop, Eric

(57) **Abstract**

The invention relates to a system for predicting plant development in order to predict the plants condition at a given moment in time starting from preselected starting conditions, comprising a computer having data input means for inputting the preselected starting conditions into the computer, data output means for outputting the predicted plants condition at the given moment in time from the computer, and a computer program installed on the computer, the computer program having program code for calculating the predicted plants condition at a first moment in time from the input data including a starting plants condition using a mathematical root-model, a mathematical growth substrate-model and a mathematical plant-model implemented in the computer program in such a way that output data from each model is usable as input data for the other models, and program code for calculating the predicted plants condition at a second moment in time, advanced in time with regard to the first moment in time, inputting the plants condition at the first moment in time as a starting plants condition, and program code for repeating calculating the predicted plants condition until the moment in time is the given moment in time.

The invention further relates to a method using this system, and a computer program used in the system.

## Description

The invention relates to a system and method for predicting plant development.

For growers and breeders of plants, it has always been difficult to choose the optimal growing conditions, like the supply of nutrients, amount of artificial light, if possible, and the starting conditions, like the growth substrate, to have plants, crop or flowers ready for harvesting or selling at a desired moment in time. This is important because the price of horticultural and agricultural products varies from week to week. Selling at the right moment may increase the profit substantially.

In the last decades, there is an even stronger need for being able to predict the condition of plants at a given moment in time, because it has become possible to control almost any parameter influencing the growth of plants. In greenhouses, this need is even stronger yet.

For instance, US patent 4.992.942 discloses computer software for monitoring and controlling the growth of plants, and using the computer in decision making in relation to nourishing of plants. The system described in the US patent uses extensive radiation models and methods. The problem, however, is that some specific choices a grower or breeder has to make when starting breeding or growing which influence the condition of plants at a given moment in time are not addressed.

The present invention seeks on the one hand to improve the predictions of plant development in time, and on the other hand make it possible to make an optimal choice of starting conditions. The present invention therefore provides a system for predicting plant development in order to predict the plants condition at a given moment in time starting from preselected starting conditions, comprising a computer having data input means for inputting the preselected starting conditions into the computer, data output means for outputting the predicted plants condition at the given moment in time from the computer, and a computer program installed on the computer, the computer program having program code for calculating the predicted plants condition at a first moment in time from the input data including a starting plants condition using a mathematical root-model, a mathematical growth substrate-model and a mathematical plant-model implemented in the computer program in such a way that output data from each model is usable as input data for the other models, and program code for calculating the predicted plants condition at a second moment in time, advanced in time with regard to the first moment in time, inputting the plants condition at the first moment in time as a starting plants condition, and program code for repeating calculating the predicted plants condition until the moment in time is the given moment in time.

The present invention further provides a method for predicting plant development in order to predict the plants condition at a given moment in time, comprising inputting plant data, growth substrate property data and root system data into a computer, and repeating calculating the plants condition at a certain moment in time before the given moment in time, based on the input data and a previously calculated plants condition, until the given moment in time is reached.

The present invention further provides a computer program comprising program instructions for calculating the development of the root system of a plant, the development of the plant above its growth substrate, and the distribution of nutrients through the growth substrate.

By combining and integrating three models, one model describing the part of a plant above a growth substrate, also called the green part of a plant, a second model describing the root system of a plant, the development of the root system and the nutrient uptake of the root system, and a third model describing the growth substrate, i.e. transportation of nutrients, retention of nutrients, it has become possible to provide growers and breeders with an instrument to help them to make an optimal choice of starting conditions and to provide better predictions of the development of plants in time.

Especially, the system and method according to the invention provide the possibility to make an optimal choice of growth substrate to be used in order to make it possible to have plants in a desired condition at a given moment in time.

A model referred to in this application is a computer program code implemented, predefined relationship between input data and output data. This relationship generally is a mathematical equation or a set of mathematical equations describe in what way the output data is calculated from the input data. A model is generally used in an algorithm for optimization, prediction or process control.

Growth substrate in this application is the substrate in which the roots of a plant grow. This can means soil, peat, hydroculture, or soilless media like mineral wool based substrates, perlite or mixtures thereof. In general, these mineral wool fibre substrates are known from, for example, US 5.992.093, US 6.042.630 and GB 1.336.426, which are all incorporated by reference herein as if fully set forth. These growth substrates may be used for the propagation of plants and growing of vegetables, perennials and other plants or used as the basis for sound absorbing walls to be covered by plants and which may have the form of granulate or of plugs, cubes, slabs or rolls which in turn may be wrapped in foil or non-woven material.

A root-model for calculating the development of a root system and the uptake of nutrients depending on the nutrient distribution, is in general known from 'Dynamics of water and nutrients in closed, recirculating sand bed systems: modelling water flow, nutrient transport, root water and nutrient uptake' by Heinen-M; Willigen-P-de; De-Willigen-P; Adams-P (ed.); Hidding-AP (ed.); Kipp-JA (ed.); Sonneveld-C (ed.); Kreij-C-de, International symposium on growing media & plant nutrition in horticulture, Naaldwijk, Netherlands, 10-16 September, 1994. Acta-Horticulturae. 1995, No. 401, 501-508, wherein general equations for water movement and nutrient transport are disclosed which enable simulation of plant growth using substrate physical properties and root nutrient uptake in closed cropping systems. This article is incorporated by reference herein as if fully set forth.

In 'Water balance of lettuce grown on sand beds' by Heinen-M; Moolenbroek-J-van; Van-Moolenbroek-J; Adams-P (ed.); Hidding-AP (ed.); Kipp-JA (ed.); Sonneveld-C (ed.); Kreij-C-de, International symposium on growing media & plant nutrition in horticulture, Naaldwijk, Netherlands, 10-16 September, 1994. Acta-Horticulturae. 1995, No. 401, 517-524, parameters are disclosed which can be used in modelling, like plant size, transpiration and evaporation data, cumulative radiation and greenhouse heating data.

In 'Rooting characteristics of lettuce grown in irrigated sand beds' by Schwarz-D; Heinen-M; Noordwijk-M-van; Van-Noordwijk-M, Plant-and-Soil. 1995, 176: 2, 205-217, input parameters for the models are described, in particular the rooting characteristics and root distribution of lettuce cv. Cortina in sand beds, as affected by substrate depth, the distance to a drain, drip lines and drip points, and the excess of nutrient solution applied. This reference is incorporated by reference as if fully set forth.

A plant-model is in general known from the references listed below, which are incorporated by reference herein as if fully set forth.

In 'Analytical growth equations and their Genstat 5 equivalents' by Heinen-M, Netherlands-Journal-of-Agricultural-Science. 1999, 47: 1, 67-89; two existing growth functions, (the exponential, the monomolecular or Mitscherlich, the logistic or autocatalytic, the Gompertz, and the Richards equations) are compared.

In 'Modelling water and nutrient uptake of crops grown in protected cultivation' by Willigen-P-de; Heinen-M; de-Willigen-P; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 227-236, model calculations on water and nutrient uptake by a lettuce crop grown in a sand bed are disclosed, with emphasis on the effect of salt concentration on water uptake from a rooting medium.

In 'Physiological investigation on sponginess in radish. Final report' by Marcelis-LFM; Wijlhuizen-M; Verkerke-DR, Fysiologische onderzoek naar voosheid bij radijs. Report -Research-Institute-for-Agrobiology-and-Soil-Fertility. 1997, No. 79, 61 pp., the relation between sponginess, tuber size and age, and the effects of light and plant spacing; the effects of electrical conductivity and soil moisture content; the effects of climate changes; the functioning of the vascular tissue; glassiness; and physiological causes are disclosed.

In 'Effects of seed number on competition and dominance among fruits in Capsicum annuum L' by Marcelis-LFM; Baan-Hofman-Eijer-LR , Annals-of-Botany. 1997, 79: 6, 687-693, growth in a greenhouse and the effect of seed number on fruit growth was disclosed.

In 'Growth analysis of sweet pepper fruits (Capsicum annuum L.)' by Marcelis-LFM; Baan-Hofman-Eijer-LR; Fernandez-Munoz-R (ed.); Cuartero-J (ed.); Gomez-Guillamon-ML , First international symposium on solanacea for fresh market, Malaga, Spain, 28-31 March, 1995. Acta-Horticulturae. 1995, No. 412, 470-478, the relation between growth of the fruit of the cultivar Mazurka, expressed in length, circumference, FW and DW of the fruit followed a sigmoid growth pattern. Various parameters influencing growth were presented.

In 'Sink strength as a determinant of dry matter partitioning in the whole plant' by Marcelis-LFM; Hall-JL (ed.); Baker-DA (ed.); Oparka-KL, Transport of photoassimilates: papers presented at the international conference, University of Kent, Canterbury, UK, 13-17 August 1995. Journal-of-Experimental-Botany. 1996, 47: Special Issue, 1281-1291, growth influencing parameters in cucumbers growth and plant condition parameters are disclosed.

In 'Influence of assimilate supply on leaf formation in sweet pepper and tomato' by Heuvelink-E; Marcelis-LFM , Journal-of-Horticultural-Science. 1996, 71: 3, 405-414; the influence of assimilate supply on leaf formation in sweet pepper cv. Mazurka and tomato cv. Counter was disclosed. Various parameters influencing plant condition are presented.

In 'A model for prediction of yield and quality of cucumber fruits' by Marcelis-LFM; Gijzen-H; Tijskens-LMM (ed.); Hertog-MLAM , Proceedings of the international symposium on applications of modelling as an innovative technology in the agri-food-chain, Model-It, Wageningen, Netherlands, 29 November-2 December, 1998. Acta-Horticulturae. 1998, No. 476, 237-242, a mechanistic model KOSI was developed to predict the weekly fresh harvest weight of cucumber fruits and their quality. The model consists of modules for greenhouse climate, greenhouse light transmission, light interception by the crop, leaf and canopy photosynthesis, assimilate partitioning, dry matter production, fruit growth, fruit dry matter content and fruit yield. The minimum data needed by KOSI for harvest prediction are date of planting of the crop and date scheduled for the last harvest. Calculations are based on long-term average data on weekly global radiation and temperature outside the greenhouse. Instead of using long-term average weather data, predicted or measured weather data can be provided as input. Model predictions can be improved by providing more input parameters, such as temperature setpoint and CO2 concentration of the greenhouse air, plant density, fruit pruning, frequency of fruit harvesting and transmissivity of the greenhouse. Model outputs are weekly yield of total fruit fresh weight, fruit number, fresh weight and age of individual fruits and the percentage of second-class fruits.

In 'Crop modelling: current status and opportunities to advance' by Hammer-GL; Marcelis-LFM , Second International Symposium on Models for Plant Growth, Environmental Control and Farm Management in Protected Cultivation, Wageningen, Netherlands, 25-28 August 1997. Acta-Horticulturae. 1998, No. 456, 27-36, a modular and generic crop template is disclosed as the appropriate vehicle to advance the science of crop modelling by facilitating the substantive dialectic needed to determine how to best model crops at the functional component or submodule level.

In 'Potential fruit growth of tomato after limiting assimilate supply' by Koning-ANM; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 53-59, a model is presented that describes the observed adaptation rate and a conceptual mechanism is proposed that distinguishes 2 components of sink activity. On the basis of this mechanism, the response of sink activity to assimilate availability and temperature is discussed.

In 'Relationship between water content of Cymbidium protocorm like body and growth' by Ibaraki-Y; Kurata-K; Marcelis-LFM , Second International Symposium on Models for Plant Growth, Environmental Control and Farm Management in Protected Cultivation, Wageningen, Netherlands, 25-28 August 1997. Acta-Horticulturae. 1998, No. 456, 61-66, a simple growth model for Cymbidium PLB growth using AGR was constructed. The model was based on the following assumptions: (1) water uptake depended on the water potential difference between PLB and medium, and (2) glucose uptake depended on the glucose concentration in the medium.

In 'Simulation of photosynthetic rate of C3 and C4 plants under low total pressure' by Iwabuchi-K; Ibaraki-Y; Kurata-K; Takakura-T; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 67-72, for the purpose of growing plants in space, simple leaf photosynthesis models of C3 and C4 plants were disclosed, applied to spinach and maize to investigate the effects of low total pressure on net photosynthetic rate at constant O2 and CO2 partial pressures. For prediction of photosynthetic responses to low total pressure, stomatal and boundary layer resistances to CO2 were expressed as functions of total pressure.

In 'A study of cumulative tomato yield for fresh market: characterization and classification of different cultivars' by Miccolis-V; Monteleone-M; Candido-V; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 73-80, a mathematical model was derived from the data, yielding information on cultivar performance and availability for the fresh market, for the cumulative fruit yield of 23 tomato cultivars.

In 'Modeling the effects of air temperature perturbations for control of tomato plant development' by Sauser-BJ; Giacomelli-GA; Janes-HW; Marcelis-LFM , Second International Symposium on Models for Plant Growth, Environmental Control and Farm Management in Protected Cultivation, Wageningen, Netherlands, 25-28 August 1997 .. Acta-Horticulturae. 1998, No. 456, 87-92, a model was developed which was capable of predicting developmental rates and changes in tomato plants based on the dry weight of the aerial portion of the plant.

In 'A single state variable model to mimic TOMGRO for control applications' by Seginer-I; Ioslovich-I; Marcelis-LFM , Second International Symposium on Models for Plant Growth, Environmental Control and Farm Management in Protected Cultivation, Wageningen, Netherlands, 25-28 August 1997. Acta-Horticulturae. 1998, No. 456, 93-97, TOMGRO, a comprehensive, 70 state-variable greenhouse tomato model is disclosed. The 2 main parameters of the compact model are (1) the size of the plant when it switches from the vegetative to the reproductive stage, and (2) the fraction of net assimilation partitioned to fruit.

In 'Predicting variability in anthesis of Easter lily (Lilium longiflorum Thunb.) populations in response to temperature' by Fisher-PR; Lieth-JH; Heins-RD; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 117-124, a model of visible bud to anthesis and the bud elongation function allowed prediction of the distribution of anthesis dates.

In 'Predicting branching in young apple trees (Malus domestica Borkh.)' by Lindhagen-M; Marcelis-LFM , Second International Symposium on Models for Plant Growth, Environmental Control and Farm Management in Protected Cultivation, Wageningen, Netherlands, 25-28 August 1997. Acta-Horticulturae. 1998, No. 456, 125-131, a dynamic model was developed describing the relationship between climatic factors and branching in young apple trees thus allowing the possibility of simulating ideal climatic conditions for various types of branching. The model has 3 parts, the first describes how leaf unfolding rate is dependent on daily temperature, the second how irradiance influences outgrowth of branches, while the third predicts at which node on the main shoot a branch develops.

In 'Modeling poinsettia vegetative growth and development: the response to the ratio of radiant to thermal energy' by Liu-Bin; Heins-RD; Liu-B; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 133-142, possible parameters for plant growth are presented, and the relationships between poinsettia vegetative growth/development and light/temperature were modelled using the computer software STELLA II.

In 'Adapting a prediction model for flower development in chrysanthemum to new cultivars' by Persson-L; Larsen-RU; Marcelis-LFM , Second International Symposium on Models for Plant Growth, Environmental Control and Farm Management in Protected Cultivation, Wageningen, Netherlands, 25-28 August 1997. Acta-Horticulturae. 1998, No. 456, 143-150, an empirical model for prediction of flower development in greenhouse chrysanthemum in relation to temperature and irradiance was disclosed, based on data from the cultivar Pert. The model describes the rate of flower development as a function of a maximum rate, Rmax, which is multiplied by a temperature function and a light function.

In 'Predicting time to flowering with a First Passage Time model' by Snipen-L; Moe-R; Soreng-J; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 151-159, a First Passage Time (FPT) model is described. The FPT concept models the occurrence of discrete events in a time-dependent process. The data sets include the potential effect of artificial light intensity, air temperature, temperature drop treatment, plant density and number of vegetative days.

In 'Modeling the effect of temperature on flowering of Hibiscus moscheutos' by Wang-ShiYing; Heins-RD; Carlson-WH; Cameron-AC; Wang-SY; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 161-169,
a curvilinear model was used to describe the effect of ADT on days to VB or flower. An exponential model was developed to quantify the relationship between flower bud diameter, ADT and days to flower. The models can be implemented in a decision-support system to predict the ADT required to achieve a target flowering date or the flowering date at a given ADT or bud diameter.

In 'Quality models in horticulture need product quality: a rare but challenging field of exploration' by Meeteren-U-van; van-Meeteren-U; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 175-187, simulation models for predicting internal quality characteristics of horticultural products are discussed, discussing the input parameters.

In 'Modelling water and nutrient uptake of crops grown in protected cultivation' by Willigen-P-de; Heinen-M; de-Willigen-P; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 227-236, model calculations on water and nutrient uptake by a lettuce crop grown in a sand bed are disclosed, with emphasis on the effect of salt concentration on water uptake from a rooting medium.

In 'Modelling diurnal nitrate uptake in young tomato (Lycopersicon esculentum Mill.) plants using a homoeostatic model' by Cardenas-Navarro-R; Adamowicz-S; Robin-P; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 247-253, a mechanistic predictive model for diurnal nitrate uptake is disclosed, based on the simple hypothesis of negative feedback uptake regulation by plant nitrate concentration.

In 'Characterizing evapotranspiration in a greenhouse lettuce crop' by Ciolkosz-DE; Albright-LD; Both-AJ; Marcelis-LFM , Second International Symposium on Models for Plant Growth, Environmental Control and Farm Management in Protected Cultivation, Wageningen, Netherlands, 25-28 August 1997. Acta-Horticulturae. 1998, No. 456, 255-261, a regression model is presented to characterize ET from greenhouse lettuce (cv. Vivaldi) based on data from 12 crops grown in a nutrient film technique (NFT) system. Several CO2 concentrations and daily light integrals were applied to the lettuce crops and the resulting daily ET integrals were measured. A regression model was derived for daily ET as a function of growth rate and the resulting daily and cumulative ET values were calculated and compared to measured values.

In 'SIMULSERRE: an education software simulating the greenhouse-crop systems' by Gary-C; Tchamitchian-M; Bertin-N; Boulard-T; Baille-A; Charasse-L; Rebillard-A; Cardi-JP; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 451-458, SIMULSERRE software is disclosed to enable the user to simulate the cycle of a greenhouse tomato crop after having taken a set of strategic (location, type of greenhouse cover, heating and CO2 enrichment systems), tactical and operational (tomato cultivar, time-course of climate and truss pruning set-points along the crop cycle, adaptation of temperature set-points to radiation, transitions between day and night set-points) decisions. SIMULSERRE is based on a set of physical and biological models.

In 'A decision model for hydroponic greenhouse tomato production' by Short-TH; Keener-HM; El-Attal-A; Fynn-RP; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 493-504, a decision model for hydroponic tomato production (HYTODMOD) was disclosed for achieving high yields and high quality fruits. The model was based on 5 key tests during each of 5 growth stages (germination and early growth, seedling, vegetative, early fruiting, and mature fruiting). The 5 key tests included hydrogen ion concentration of the feeding solution, electrical conductivity of the feeding solution, root temperature, greenhouse air temperature, and air relative humidity. Optimum ranges for the 5 tests were developed HYTODMOD and utility theory was used to prioritize actions needed to correct unacceptable test levels. Thirteen Growth Response Functions (GRFs) were necessary to represent the potential influence of key test variables on the growth of the tomato plant throughout the entire production period.

In 'Opportunities and bottlenecks for model applications in practice' by Bosch-JAM-van-den; van-den-Bosch-JAM; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 505-507, several models are discussed for energy requirement, transpiration, temperature integration and photosynthesis.

In 'Application of Multiple Criteria Decision Making for the design and analysis of greenhouse cropping systems' by Bakker-EJ; Sanden-PACM-van-de; van-de-Sanden-PACM; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 509-514, a method for reaching a decision in optimization of cropping systems where various factors is disclosed.

In 'Electrotechnology for water conditioning: a simulation model' by Spinu-VC; Albright-LD; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 283-290, a simulation model was disclosed for predicting the dynamics of all important processes related to water treatment in the unit. This computer model establishes the relationships between design parameters; water quality parameters (such as total dissolved solids (TDS), concentrations of principal ionic species, alkalinity, hardness, pH, EC, temperature); the same parameters for water after treatment; regime and efficiency parameters (electrical current applied, electricity and energy consumed/m3 of treated water, current efficiency for TDS removal); and quantities of byproducts derived from the processes accompanying operation of an electrolytic water conditioning unit (02, CO2, base solution).

In 'The value of crop and greenhouse models in greenhouse environmental control' by Day-W; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 295-303, models of greenhouse environments and crop responses were disclosed explaining major features of crop performance and defining better protected crop environments and it is suggested that a careful mix of quantitative modelling and artificial intelligence tools is required to ensure that the appropriate balance between grower knowledge and model prediction.

In 'Formulation and sensitivity analysis of a dynamic model of the greenhouse climate validation for a mild Mediterranean climate' by Nava-LM; Plaza-S-de-la; Garcia-JL; Luna-L; Benavente-R; Duran-JM; Retamal-N; dela-Plaza-S; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 305-312, a dynamic greenhouse climate model with 5 system components (growing medium, soil, crop, cover and inside air) is disclosed. By formulating the balance equations of energy and mass of each component, a set of differential equations is obtained. The equations are solved numerically by means of a computer program. In order to predict the climate of a specific greenhouse, the program asks the user for the physical characteristics of the system and the initial values of the simulated variables (temperatures of the growing medium and soil, temperature of the crop and cover, temperature and humidity of the inside air). The simulation interval lasts one minute, therefore the values of the boundary variables (outside temperature and humidity, solar radiation, etc.) have to be supplied with the same frequency.

In 'Effect of CO2 supply strategy on specific energy consumption' by Zwart-HF-de; de-Zwart-HF; Marcelis-LFM , Second International Symposium on Models for Plant Growth, Environmental Control and Farm Management in Protected Cultivation, Wageningen, Netherlands, 25-28 August 1997. Acta-Horticulturae. 1998, No. 456, 347-353, a greenhouse climate simulation model which includes a description of heating system performance was disclosed.

In 'The implementation of software engineering concepts in the greenhouse crop model HORTISIM' by Cohen-S; Gijzen-H; Marcelis-LFM, Second International Symposium on Models for Plant Growth, Environmental Control and Farm Management in Protected Cultivation, Wageningen, Netherlands, 25-28 August 1997. Acta-Horticulturae. 1998, No. 456, 431-440, HORTISIM (HORTIcultural SIMulation), a greenhouse crop simulation model, designed to predict the amount and timing of production in relation to crop and greenhouse characteristics and climate control, is disclosed. It has a modular structure enabling integration with other models dealing with other process such as crop protection, nutrition or economics.

In 'HORTISIM: a model for greenhouse crops and greenhouse climate' by Gijzen-H; Heuvelink-E; Challa-H; Dayan-E; Marcelis-LFM; Cohen-S; Fuchs-M; Marcelis-LFM , Second International Symposium on Models for Plant Growth, Environmental Control and Farm Management in Protected Cultivation, Wageningen, Netherlands, 25-28 August 1997. Acta-Horticulturae. 1998, No. 456, 441-450, a combined model for crop production and climate in greenhouses, HORTISIM, is described. Existing models, developed by several research groups, of various aspects of crop growth and greenhouse climate were integrated. HORTISIM contains 7 submodels (Weather, Greenhouse Climate, Soil, Crop, Greenhouse Manager, Soil Manager and Crop Manager) plus a simulation process manager (the "engine"). Climate conditions inside the greenhouse can be calculated from outdoor weather. The use of energy, CO2)> and water can be quantified. Crop photosynthesis, dry matter production, dry matter partitioning and individual fruit growth in fruit vegetable crops can be simulated

In 'Evaluation under commercial conditions of a model of prediction of the yield and quality of cucumber fruits' by Marcelis-LFM; Gijzen-H, Scientia-Horticulturae. 1998, 76: 3-4, 171-181, a mechanistic model was developed to predict the weekly fresh weight yield of cucumber fruits and the fresh weight and developmental stage of individual fruits at harvest, the latter two being important criteria of fruit quality. The model consists of modules for: greenhouse light transmission; light interception by the crop; leaf and canopy photosynthesis; assimilate partitioning; dry matter production; fruit growth; fruit dry matter content; and time of fruit harvest.

In 'Modelling biomass production and yield of horticultural crops: a review' by Marcelis-LFM; Heuvelink-E; Goudriaan-J , Scientia-Horticulturae. 1998, 74: 1-2, 83-111, descriptive and explanatory modelling of biomass production and yield of horticultural crops is disclosed with special reference to the simulation of leaf area development, light interception, dry matter (DM) production, DM partitioning and DM content. Most models for prediction of harvest date (timing of production) are descriptive. Important components of photosynthesis-based models were found to be leaf area development, light interception, photosynthesis and respiration. Leaf area is herein predominantly simulated as a function of plant developmental stage, or of simulated leaf dry weight. Crop photosynthesis can be calculated as a function of intercepted radiation, or more accurately by considering radiation absorption of different leaf layers in combination with a submodel for leaf photosynthesis. In most crop growth models, respiration is subdivided into growth or maintenance.

In 'A similitude model for testing greenhouse evaporative cooling pads under the hot-arid conditions of the U.A.E' by Al-Massoum-A; Haffar-I; Ahmed-MH; Marcelis-LFM, Second international symposium on models for plant growth, environmental control and farm management in protected cultivation, Wageningen, Netherlands, 25-28 August 1997. Acta-Horticulturae. 1998, No. 456, 329-337, a similitude model was disclosed to test the performance of greenhouse evaporative cooling pads under hot arid conditions. The model measured variations in dry- and wet-bulb temperatures before and after passing through the pads and consequently calculated the cooling efficiency of the pad for various air and water flows. Other parameters determined per pad were their water consumption efficiency, permeability and face air speed, and the water flow rate through them.

In 'Establishment and validation of a model to estimate energy consumption of localized heating of greenhouse substrates' by Benavente-RM; Plaza-S-de-la; Navas-LM; De-la-Plaza-S; Marcelis-LFM , Second international symposium on models for plant growth, environmental control and farm management in protected cultivation, Wageningen, Netherlands, 25-28 August 1997. Acta-Horticulturae. 1998, No. 456, 339-346, a computer model was disclosed for estimating changes in substrate temperatures as a function of time and depth, and energy consumption with different configurations (energy savings) of substrate heating using electrical wire.

In 'Energy modelling for heated concrete floors in greenhouses' by Garcia-JL; Plaza-S-de-la; Navas-LM; Benavente-RM; Duran-JM; Luna-L; De-la-Plaza-S; Marcelis-LFM , Second international symposium on models for plant growth, environmental control and farm management in protected cultivation, Wageningen, Netherlands, 25-28 August 1997. Acta-Horticulturae. 1998, No. 456, 355-361, a simple time-dependent model with one-hour time steps was disclosed for calculating the energy balance of a simulated greenhouse with a heated concrete floor. Outside climate data and greenhouse parameters (thermal loss coefficient, transmissivity of cover, and setpoint temperatures) were the input values required by the program. Greenhouse soil, air temperature and energy supplied were obtained by means of the program.

In 'Control and modelling of vertical temperature distribution in greenhouse crops' by Kempkes-FLK; Bakker-JC; Braak-NJ-van-de; Van-de-Braak-NJ; Marcelis-LFM , Second international symposium on models for plant growth, environmental control and farm management in protected cultivation, Wageningen, Netherlands, 25-28 August 1997. Acta-Horticulturae. 1998, No. 456, 363-370 a model was disclosed to describe the vertical temperature distribution of a greenhouse crop. The radiation exchange factors between heating pipes, crop layers, soil and roof were determined as a function of the vertical distribution of the leaf area of the crop. The model can be used to predict crop temperature distribution as a function of the position and temperature of the heating pipe.

In 'Mediterranean greenhouse energy balance' by Pita-GPA; Pontes-M; Vargues-A; Marcelis-LFM, Second international symposium on models for plant growth, environmental control and farm management in protected cultivation, Wageningen, Netherlands, 25-28 August 1997. Acta-Horticulturae. 1998, No. 456, 375-382, a model to predict the greenhouse climate was disclosed and validated using measurements.

In 'Light transmission of zigzag-shaped multispan greenhouses' by Stoffers-JA; Marcelis-LFM , Second international symposium on models for plant growth, environmental control and farm management in protected cultivation, Wageningen, Netherlands, 25-28 August 1997. Acta-Horticulturae. 1998, No. 456, 383-390, a model (ZIG-ZAG.PAS) based on the tracing of rays was disclosed.

In 'Reducing environmental impact of energy use in tomato cultivation in the Netherlands: research by systems analysis' by Pluimers-JC; Marcelis-LFM , Second international symposium on models for plant growth, environmental control and farm management in protected cultivation, Wageningen, Netherlands, 25-28 August 1997. Acta-Horticulturae. 1998, No. 456, 459-465, a model was disclosed which calculates gas use, CO2 emission reduction, and costs of energy saving options in tomato cultivation

In 'Mushroom tunnel climate: neural networks compared' by Martin-DP; Ringwood-JV; Marcelis-LFM , Second international symposium on models for plant growth, environmental control and farm management in protected cultivation, Wageningen, Netherlands, 25-28 August 1997. Acta-Horticulturae. 1998, No. 456, 477-484 the application of artificial neural networks (NN) to the modelling of climate in mushroom tunnels was disclosed.

In 'Simulation model for determining the effects of farm specific aspects on energy consumption in glasshouse' by Ruijs-MNA; Vermeulen-PCM; Marcelis-LFM , Second international symposium on models for plant growth, environmental control and farm management in protected cultivation, Wageningen, Netherlands, 25-28 August 1997. Acta-Horticulturae. 1998, No. 456, 515-521, a simulation model was disclosed to calculate the energy consumption for 10 sweet pepper producing farms on the basis of farm setup, local weather, energy saving equipment and glasshouse climate. The model was also used to calculate the energy consumption for a standard farm setup, one weather location and the average actual glasshouse climate to determine the separate effects.

Each of the above-referenced models can be used, also in combination. Preferably, a person using the system according to the present invention may chose the specific plant model using for example a selection box or by inputting his choice of plant-model, suited for the specific plant of condition he uses. The specific plant model may also be choses using othe input data like type of substrate of if a greenhouse is used or not.

A growth substrate-model, in general used for calculating the distribution of water with nutrients through the growth substrate and transport of water, nutrients dissolved therein as well as gasses, through the substrate on the basis of physical and chemical principles, is in general known from the references below, which are incorporated by reference herein as if fully set forth. These models may also be combined or together be implemented into the system, making it possible for a used to select a specific model.

In 'Adsorption and accumulation of Na in recirculating cropping systems' by Heinen-M; Willigen-P-de; de-Willigen-P; Bar-Yosef-B (ed.); Seginer-I, Proceedings of the Third International Workshop on Models for Plant Growth and Control of the Shoot and Root Environments in Greenhouses, Bet Dagan, Israel, 21-25 February, 1999. Acta-Horticulturae. 1999, No. 507, 181-187; a recirculating rockwool growth substrate is disclosed, and input parameters for a growth substrate model. A simulation model that describes water movement and solute transport in porous media is further disclosed.

In 'The effect of hysteresis on microbial activity in computer simulation models' by Whitmore-AP; Heinen-M, Soil-Science-Society-of-America-Journal. 1999, 63: 5, 1101-1105, more parameters influencing growth relating to growth substrate are disclosed, like the status of the soil water, which is expressed by pressure head (h) or water content (theta). Furthermore, the use of computer simulation models of mineralization coupled to a model that follows the hysteresis of water relations in soil, was disclosed.

In 'Unconventional flow of water from dry to wet caused by hysteresis: a numerical experiment' by Heinen-M; Raats-PAC, Water-Resources-Research. 1999, 35: 8, 2587-2590; a numerical simulation model for hysteretic water movement is disclosed.

In 'Uncertainties in nutrient budgets due to biases and errors' by Oenema-O; Heinen-M; Smaling-EMA (ed.); Oenema-O (ed.); Fresco-LO, Nutrient-disequilibria-in-agroecosystems:-concepts-and-case-studies. 1999, 75-97; the nutrient accounting system MINAS as a policy instrument to regulate nitrogen and phosphorus surplus for agricultural land in the Netherlands is disclosed.

The plants condition is the state in which the plant is, which can be defined for example by the area of the leaves or the quantity and/or ripeness of fruits. Parameters which can be used to define the plants condition are for example disclosed in the references cited above.

The starting conditions comprise input parameters describing the type of plant, its features like growing speed, and features of for instance a greenhouse, if used. Specifically, the parameters may be greenhouse parameters, for instance the type, area, measuring plot, height, window types and area, amount of light in the greenhouse, heating parameters, CO2 amounts, and many more.

A second group of parameters are greenhouse climate parameters, like temperature, humidity, wet and dry bulb, shading, energy input, plant temperature and many more.

A third group of parameters are nutrient solution parameters, like drain percentage, water uptake, volume drip cycle, discharge per drip cycle, EC of the fertiliser solution, pH of the fertiliser solution, start of irrigation, stop of irrigation, concentration of macro nutrients, concentration of micro nutrients and many more.

A fourth group of parameters are outside climate parameters, like radiation, temperature and many more.

A fifth group of nutrients are plant distribution parameters, like the distance between plants, plant density, plant blocks and many more.

A sixth group of parameters are substrate parameters, like the EC and pH in the substrate, the temperature of the substrate, water content, concentration of micro and macro nutrients, type, system, dimension of the substrate, the drain system, the distance to pipes, and slope of the substrate with regard to the horizontal plane.

Surprisingly, an extremely sensitive parameter is the slope of the substrate with respect to the horizontal plane. Especially in case of slabs and/or blocks of growth substrate, like for instance mineral wool based slabs or blocks, the influence of the parameters defining the orientation of the substrate with respect to the horizontal plane was unexpectedly large: an increase of only 1 % in the slope angle had in some cases a larger influence than the exact type of mineral wool substrate used.

Preferably, the growth substrate properties are implemented in the growth substrate-model as slabs of growth substrate. Preferably, the growth substrate-model further comprises slope parameters for taking into account the orientation of the slabs of growth substrate with respect to the horizontal plane.

Other plants conditions are output parameters, for instance harvest parameters, like yield per square meter, and size of the fruits per class.

Other output parameters are plant parameters like first flowering, number and area of leaves.

Preferably, many of the input parameters are stored in databases. For example, greenhouse parameters of different types of greenhouse may be stored in a database, as well as specific data concerning plants, like for instance tomatoes, lettuce, and many other plants.

Preferably, at least starting plants conditions which have to be inputted into the model are obtained from databases which are linked to the computer program.

Preferably, a user of the system or method selects many of the input parameters from one or a plurality of databases which are connected to the computer program. These databases may be stored on data storage means in the computer having the computer program installed thereon. In that case, the computer has means for extracting input parameters, used in the computer program, from one or more databases.

The databases and the computer program may also be part of a distributed system, wherein the program runs on a client computer or a server computer, some databases may be stored on one or more client computers and some databases may be stored on one or more server computers. The client computers and the server computers may be connected via the internet of any other electronic data connecting means, like a network or wireless network.

Preferably, the computer program is installed on a server, as well as some of the databases. The server computer is connected via datacommunication means, preferably the internet, to a client computer, having data input means like a keyboard, mouse, scanner, camera, etcetera. The client computer preferably comprises data storage means comprising at least one database. Through the client computer system, a user transfers input parameters and other input data to the server, where the input parameters are stored in memory means or data storage means. The computer program obtains input parameters from the databases on the server as well as from the memory means of datastorage means, and uses the input parameter for predicting the plans condition at the given moment in time.

In the method according to the invention, preferably the data is inputted into a model implemented in a computer program, wherein the model comprises a root-submodel for the root system, a plant-submodel for the plant above the growth substrate, and a growth substrate-submodel for the growth substrate.

In the method according to the invention, preferably data is exchanged between the submodels during each calculation in order to calculate the plant condition.

The invention further relates to a method for growing plant, comprising determination of the optimal growth substrate by predicting plant growth on several growth substrates using a mathematical root-model, a mathematical growth substrate-model and a mathematical plant-model which are integrated into one plant development prediction model.

The invention further relates to a computer program for predicting the development of plants, having implemented therein a root-model, a growth substrate-model and a plant-model.

The invention further relates to a carrier medium carrying the computer program according to any one of the preceding claims.

The invention is further elucidated in the drawings, which describe an example of a system and method according to the present invention. In the drawings is shown in:
Figure 1 a general-purpose computer system,
figure 2 a greenhouse,
figure 3 a diagram of the integration of the sub-models,
figure 4 the diagram of figure 4, with links to databases.

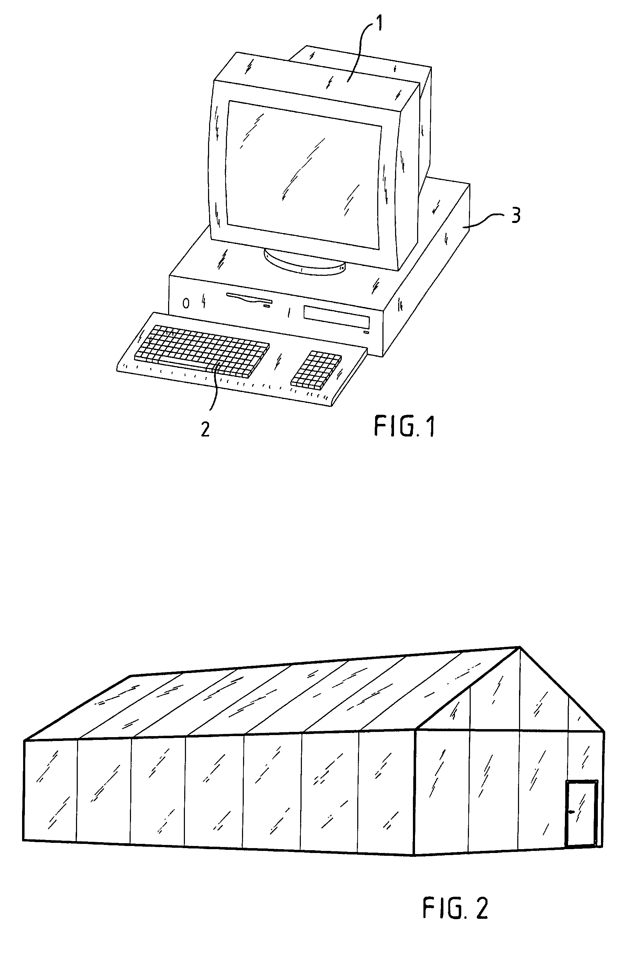

Figure 1 shows a general purpose computer 3, which may be suitable for implementing the system and method and computer program according to the present invention. The computer has data input means 2, here a keyboard, and data output means 1, here a display. The computer may have a memory, a processor and additional data storage means like a hard-disk of CD-rom or DVD player and/or recorder. The computer may be connected to the internet to other general-purpose computers.

Figure 2 shows a greenhouse 2. The method and system are particularly suited for predicting a plants development in greenhouses. In a greenhouse, many of the starting conditions as well as grwoth parameters can be steered.

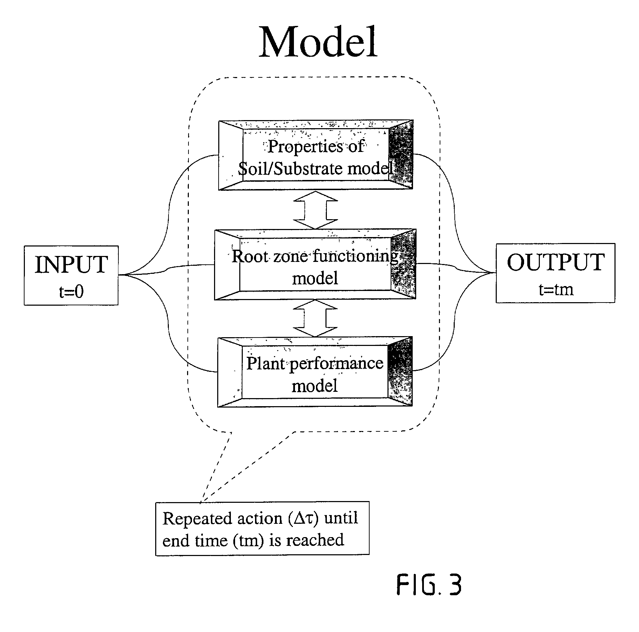

Figure 3 shows a diagram indicating in which way the three models, i.e. the root-model, the plant-model and the growth substrate model, are implemented in a computer program. From figure 3 it can be clearly seen that the models exchange data. Plants starting conditions, including all the input parameters, a moment in time, defined as the starting time t=0, the given moment in time, defined as the end time t=tm, and the steps in time Δt are inputted. The software using the model repeats calculating the plants condition at a next moment in time Δt later over and over again, increasing the time stepwise with a step-size Δt until the endtime is reached. The calculations are repeated until the given moment in time is reached.

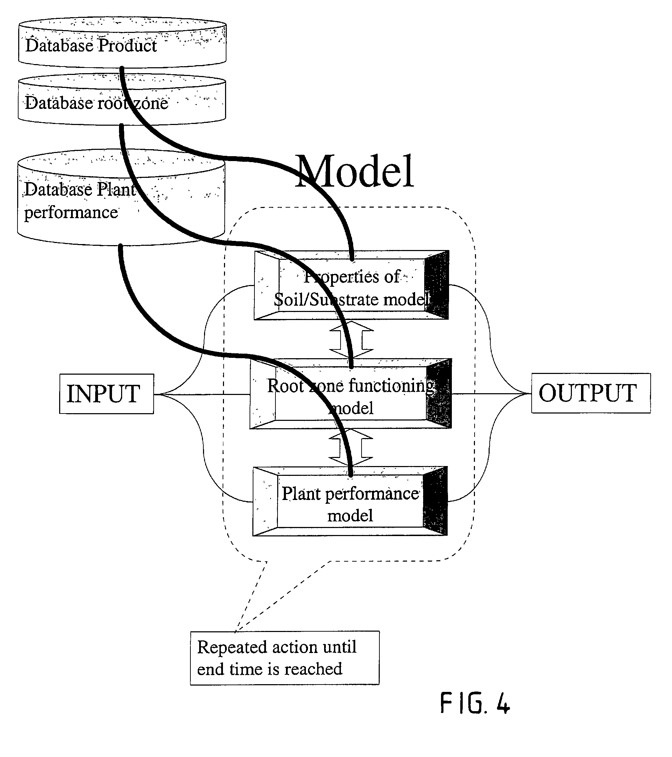

In figure 4, the diagram of figure 3 is presented, with three databases comprising data about the growth substrate (Database Product), about the root zone (Database rootzone) and about the plant (Database plant performance). The plant model, the root model and the growth substrate model all use data from the database in the calculation.

## Claims

1. A system for predicting plant development in order to predict the plants condition at a given moment in time starting from preselected starting conditions, comprising a computer having data input means for inputting the preselected starting conditions into the computer, data output means for outputting the predicted plants condition at the given moment in time from the computer, and a computer program installed on the computer, the computer program having program code for calculating the predicted plants condition at a first moment in time from the input data including a starting plants condition using a mathematical root-model, a mathematical growth substrate-model and a mathematical plant-model implemented in the computer program in such a way that output data from each model is usable as input data for the other models, and program code for calculating the predicted plants condition at a second moment in time, advanced in time with regard to the first moment in time, inputting the plants condition at the first moment in time as a starting plants condition, and program code for repeating calculating the predicted plants condition until the moment in time is the given moment in time.

2. The system according to claim 1, wherein the growth substrate properties are implemented in the growth substrate-model as slabs and/or blocks of growth substrate.

3. The system according to claim 2, wherein the growth substrate-model further comprises slope parameters for taking into account the orientation of the slabs and/or blocks of growth substrate with respect to the horizontal plane.

4. A method for predicting plant development in order to predict the plants condition at a given moment in time, comprising inputting plant data, growth substrate property data and root system data into a computer, and repeating calculating the plants condition at a certain moment in time before the given moment in time, based on the input data and a previously calculated plants condition, until the given moment in time is reached.

5. The method according to claim 4, wherein the data is inputted into a model implemented in a computer program, wherein the model comprises a root-submodel for the root system, a plant-submodel for the plant above the growth substrate, and a growth substrate-submodel for the growth substrate.

6. The method according to claim 5, wherein data is exchanged between the submodels during each calculation in order to calculate the plant condition.

7. In a method for determinating the optimal growth substrate among several growth substrate, predicting plant growth on several growth substrates using a mathematical root-model, a mathematical growth substrate-model and a mathematical plant-model which are integrated into one plant development prediction model.

8. A computer program comprising program instructions for calculating the development of the root system of a plant, the development of the plant above its growth substrate, and the distribution of nutrients through the growth substrate.

9. A computer program for predicting the development of plants, having implemented therein a root-model, a growth substrate-model and a plant-model.

10. A computer program comprising computer program code means adapted to perform all the steps of claims 8 or 9 when said program is run on a computer.

11. A carrier medium carrying the computer program according to any one of the preceding claims.

12. An apparatus comprising one or more of the feature disclosed in the description and/or shown in the drawings.

13. A method comprising one or more of the features disclosed in the description and/or shown in the drawings.
